# EUROPÄISCHE PATENTSCHRIFT

(11) **EP 1 136 316 B1**
(45) Veröffentlichungstag und Bekanntmachung des Hinweises auf die Patenterteilung: **28.12.2005**
(21) Anmeldenummer: 01105745.2
(22) Anmeldetag: 08.03.2001
(51) Int. Cl.: B60P 1/28, F16D 69/02

(54) **Anordnung zum Abstützen einer Kippmulde eines Kippfahrzeugs**
A support structure for a tipping bucket of a dump truck
Stucture de support pour une benne basculante d'un camion

(30) Priorität: 24.03.2000 DE 10014860
(43) Veröffentlichungstag der Anmeldung: 26.09.2001
(73) Patentinhaber: TMD Friction Services GmbH, 51381 Leverkusen (DE)
(72) Erfinder: Theopold, Kurt, 32657 Lemgo (DE)
(74) Vertreter: Hosbach, Hans Ulrich

(56) Entgegenhaltungen:
- WO-A-97/32772
- DE-U- 1 817 013
- DE-U- 29 604 009
- US-A- 4 173 681

## Beschreibung

Die Erfindung betrifft eine Anordnung zum Abstützen einer Kippmulde an mindestens einem Rahmenelement eines Kippfahrzeugs, mit mindestens einer Anschlagplatte, die mit einem der Bauteile Rahmenelement und Kippmulde fest verbunden ist und eine Anschlagfläche zum Abstützen an einer Gegenfläche des anderen der beiden Bauteile aufweist, wie z.B aus DE-U-1 817 013 bekannt.

Aus der Praxis ist es bekannt, die Anschlagplatte aus elastischem, insbesondere aus Gummi-ähnlichem Material herzustellen. Es hat sich gezeigt, daß derartige Anschlagplatten einem vergleichsweise raschen Verschleiß unterliegen. Entsprechend häufig ist es erforderlich, die Anschlagplatten auszutauschen. Der dadurch bedingte Kostenaufwand ist keineswegs vernachlässigbar, und zwar nicht nur wegen des benötigten Material- und Arbeitsaufwandes, sondern vor allen Dingen wegen der unvermeidbaren Stillstandszeiten des Kippfahrzeugs.

Der Erfindung liegt daher die Aufgabe zugrunde, den Wartungsaufwand der eingangs genannten Anordnung zu vermindern.

Zur Lösung dieser Aufgabe ist die eingangs genannte Anordnung erfindungsgemäß dadurch gekennzeichnet, daß die Anschlagfläche der Anschlagplatte von einem Reibmaterial gebildet wird und daß an der Anschlagfläche ein Reibwert im Bereich von 0,1 bis 0,2 eingestellt ist.

Der Erfindung liegt die Erkenntnis zugrunde, daß der hohe Wartungsaufwand der elastischen Anschlagplatten auf die Leichtbauweise zurückzuführen ist, die sich im gesamten Fahrzeugbau durchgesetzt hat, also auch im Nutzfahrzeugbau und vor allen Dingen auch im Bau von Spezialfahrzeugen. Das gesamte Chassis moderner Kippfahrzeuge ist in Leichtbauweise ausgeführt, und zwar einschließlich des Hilfsrahmens, an dem sich die Kippmulde abstützt. Aufgrund der Leichtbauweise kommt es im Betrieb zu unvermeidbaren Torsionsbeanspruchungen der Rahmenelemente. Diese verwinden sich, so daß die bekannten Anschlagplatten Querbeanspruchungen unterworfen werden, denen sie nicht gewachsen sind. Das Gummi-ähnliche Material ermüdet und wird zerstört.

Das erfindungsgemäß eingesetzte Reibmaterial hingegen verleiht der Anschlagfläche der Anschlagplatte einen relativ niedrigen Reibwert, der im unteren Bereich der Festkörperreibung liegt. Kommt es zu Torsionen des Rahmenelements, so gleitet die Anschlagfläche über die Gegenfläche. Querbeanspruchungen der Anschlagplatte werden also minimiert. Bereits aus diesem Grunde liegen bei der erfindungsgemäß eingesetzten Anschlagplatte günstige Verhältnisse vor. Hinzukommen, daß das Reibmaterial von fester Konsistenz ist und daher eine hohe mechanische Belastbarkeit besitzt. Insgesamt liegen die Standzeiten der erfindungsgemäß eingesetzten Anschlagplatten weit über denen der bekannten Anschlagplatten aus Gummi-ähnlichem Material.

Überraschenderweise hat es sich gezeigt, daß das Reibmaterial mit seiner Konsistenz in der Lage ist, den Aufschlag der Kippmulde zu dämpfen und daß es trotz des geringen Reibwertes des Reibmaterials zu einer sehr guten Dämpfung der Querbewegungen der Mulde kommt. Die erfindungsgemäß eingesetzten Anschlagplatten gewährleisten also eine sehr gute und sichere Führung der Kippmulde während des Kipp- und Fahrbetriebes.

Zu erwähnen sei schließlich die hohe Verschleißfestigkeit des Reibmaterials, verbunden mit einer praktisch völligen Temperatur-Unabhängigkeit der hier ausschlaggebenden Eigenschaften (im Temperaturbereich von -50°C bis +300°C) und einer hohen Resistenz gegen betriebsbedingte Verschmutzungen, beispielsweise durch Öle und Fette.

Die Anschlagplatte kann ohne weiteres aus Verbundmaterial bestehen und beispielsweise einen Grundkörper aus festem oder elastischem Material aufweisen, der eine mehr oder weniger dicke Schicht aus dem die Anschlagfläche bildenden Reibmaterial trägt. Ein elastischer Grundkörper vermag die Dämpfungseigenschaften zu verbessern und wird Dank des Reibmaterials vor schädlichen Querbelastungen geschützt. Allerdings ist es aus fertigungstechnischen Gründen häufig vorteilhaft, die Anschlagplatte komplett aus dem Reibmaterial herzustellen, zumal dieses in der Lage ist, den wesentlichen Anforderungen in Alleinstellung zu genügen.

Zwar besteht durchaus die Möglichkeit die Anschlagplatte an der Kippmulde anzuordnen, jedoch kann es aus Wartungsgründen vorteilhafter sein, die Anschlagplatte am Rahmenelement zu befestigen, wobei sie dieses vorzugsweise umgreift und durch Auf- bzw. Umspritzen mit ihm verbunden ist.

Die Zahl der Anschlagplatten wird an die jeweiligen Erfordernisse angepaßt. Häufig wird es vorteilhaft sein, mit einer einzigen Anschlagplatte pro Rahmenelement zu arbeiten.

In wesentlicher Weiterbildung der Erfindung wird vorgeschlagen, daß das Reibmaterial aus einer Formmasse geformt ist, die
30 - 45 % Bindemittel
35 - 44 % Textil-, Mineral- oder Glasfasern oder - schnitzel oder Mischungen dieser Bestandteile,
5 - 14 % Verarbeitungshilfsmittel und
0 - 8 % Reibungsänderungsmittel
enthält.

Besonders bewährt hat sich eine Formmasse, die
30 - 45 % Bindemittel,
5 - 10 % Härter,
30 - 40 % Textilschnitzel,
5 - 15 % Textilfäden,
0 - 8 % Reibungsänderungsmittel und
1 - 4 % Schwarzpigmente
enthält.

Dabei ist es vorteilhaft, daß das Bindemittel aus Phenolnovolak und der Härter aus Hexamethylentetramin besteht.

Als Alternative wird in Weiterbildung der Erfindung vorgeschlagen, daß das Reibmaterial
15 - 30 % Bindemittel,
10 - 30 % Fasern,
10 - 25 % Füllstoffe und
20 - 60 % Reibungsänderungsmittel
enthält.

In jedem Falle ist es vorteilhaft, daß das Reibungsänderungsmittel aus PTFE besteht.

Schließlich ist eine bevorzugte Ausführungsform dadurch gekennzeichnet, daß als Reibmaterial ein Sinterwerkstoff, bestehend aus Eisen und/oder Nichteisenmetallen und/oder Kohlenstoff und/oder Phosphor und/oder Schwefel und/oder deren Legierungen und/oder deren Verbindungen in einer Menge von mindestens 50 Vol.-% und einem oder mehreren Schmier/Gleitmitteln eingesetzt wird.

Die Erfindung wird im folgenden anhand eines bevorzugten Ausführungsbeispiels im Zusammenhang mit der beiliegenden Zeichnung näher erläutert. Die Zeichnung zeigt in:

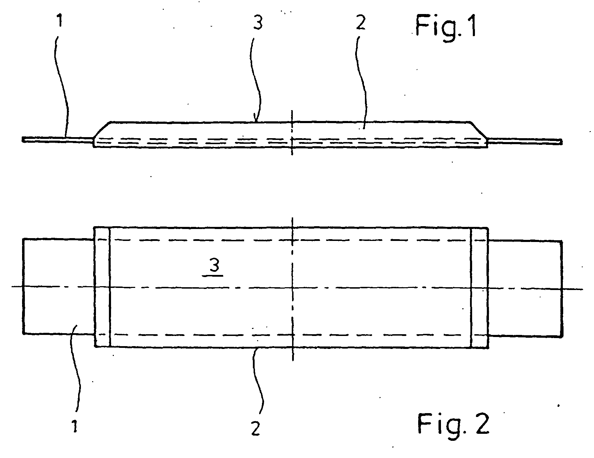

Figur 1 eine schematische Seitenansicht einer Anordnung nach der Erfindung;
Figur 2 einen schematischen Grundriß der Anordnung nach Figur 1.

Die dargestellte Anordnung weist ein Leichtbau-Rahmenelement 1 auf, welches eine Anschlagplatte 2 trägt. Die Anschlagplatte 2 besteht aus Reibmaterial und umgreift das Rahmenelement 1.

Die Anschlagplatte 2 definiert eine Anschlagfläche 3, deren Reibwert auf 0,15 eingestellt ist.

Die Anordnung dient zum Abstützen einer Kippmulde eines Kippfahrzeugs, wobei die Anschlagfläche 3 der Anschlagplatte 2 an einer Gegenfläche der Kippmulde zur Anlage kommt. Bei Verwindungen des Rahmenelements 1 wird eine Relativbewegung zwischen der Anschlagplatte 2 und der Kippmulde zugelassen.

Das Reibmaterial der Anschlagplatte 2 enthält
35 % Phenolnovolack als Bindemittel,
8 % Hexamethylentetramin als Härter,
35 % Textilschnitzel,
10 % Textilfäden,
4 % PTFE als Reibungsänderungsmittel und
2 % Schwarzpigmente

Diese Bestandteile des Reibmaterials werden zu einer Formmasse gemischt. Letztere wird um das Rahmenelement 1 herumgespritzt und sodann einer Druck- und Temperaturbehandlung unterworfen, und zwar unter entsprechender Zeitsteuerung. Eine Oberflächenbehandlung der Anschlagfläche vervollständigt den Herstellungsvorgang.

Es entsteht ein hoch-verschleißfestes Reibmaterial, wie man es beispielsweise auch für Brems- und Kupplungsbeläge einsetzen kann.

Im Rahmen der Erfindung sind durchaus Abwandlungsmöglichkeiten gegeben. So kann die Anschlagplatte als Schichtkörper ausgebildet sein, solange ihre Anschlagfläche von Reibmaterial gebildet wird. Auch besteht die Möglichkeit, die Anschlagplatte vorzufertigen und einseitig auf das Rahmenelement aufzusetzen. Ferner kann jedes Rahmenelement eine Mehrzahl von Anschlagplatten tragen. Schließlich kann das Rahmenelement eine Gegenfläche definieren, wobei die Anschlagplatte an der Kippmulde angeordnet ist.

## Patentansprüche

1. Anordnung zum Abstützen einer Kippmulde an mindestens einem Rahmenelement (1) eines Kippfahrzeugs, mit mindestens einer Anschlagplatte (2), die mit einem der Bauteile Rahmenelement und Kippmulde fest verbunden ist und eine Anschlagfläche (3) zum Abstützen an einer Gegenfläche des anderen der beiden Bauteile aufweist,
**dadurch gekennzeichnet,**
**daß** die Anschlagfläche (3) der Anschlagplatte (2) von einem Reibmaterial fester Konsistenz gebildet wird und daß an der Anschlagfläche ein Reibwert im Bereich von etwa 0,1 - 0,2 eingestellt ist.

2. Anordnung nach Anspruch 1, **dadurch gekennzeichnet, daß** die Anschlagplatte (2) das Rahmenelement (1) umgreift.

3. Anordnung nach Anspruch 1 oder 2, **dadurch gekennzeichnet, daß** die Anschlagplatte (2) aus dem Reibmaterial besteht.

4. Anordnung nach Anspruch 3, **dadurch gekennzeichnet, daß** das Reibmaterial auf das Rahmenelement (1) aufgespritzt ist.

5. Anordnung nach einem der Ansprüche 1 bis 4, **dadurch gekennzeichnet, daß** das Reibmaterial aus einer Formmasse geformt ist, die
30 - 45 % Bindemittel,
35 - 55 % Textil-, Mineral- oder Glasfasern oder - schnitzel oder Mischungen dieser Bestandteile,
5 - 14 % Verarbeitungshilfsmittel und
0 - 8 % Reibungsänderungsmittel enthält.

6. Anordnung nach Anspruch 5, **dadurch gekennzeichnet, daß** die Formmasse
30 - 45 % Bindemittel,
5 - 10 % Härter,
30 - 40 % Textilschnitzel,
5 - 15 % Textilfäden,
0 - 8 % Reibungsänderungsmittel und
1 - 4 % Schwarzpigmente
enthält.

7. Anordnung nach Anspruch 6, **dadurch gekennzeichnet, daß** das Bindemittel aus Phenolnovolak und der Härter aus Hexamethylentetramin besteht.

8. Anordnung nach einem der Ansprüche 1 bis 4, **dadurch gekennzeichnet, daß** das Reibmaterial
15 - 30 % Bindemittel,
10 - 30 % Fasern,
10 - 25 % Füllstoffe und
20 - 60 % Reibungsänderungsmittel
enthält.

9. Anordnung nach einem der Ansprüche 5 bis 8, **dadurch gekennzeichnet, daß** das Reibungsänderungsmittel aus PTFE besteht.

10. Anordnung nach einem der Ansprüche 1 bis 3, **dadurch gekennzeichnet, daß** als Reibmaterial ein Sinterwerkstoff, bestehend aus Eisen und/oder Nichteisenmetallen und/oder Kohlenstoff und/oder Phosphor und/oder Schwefel und/oder deren Legierungen und/oder deren Verbindungen in einer Menge von mindestens 50 Vol.-% und einem oder mehreren Schmier/Gleitmitteln eingesetzt wird.

## Claims

1. Arrangement for supporting a tipping hopper on at least one frame element (1) of a tipper truck, with at least one stop plate (2) which is firmly connected to one of the components comprising the frame element and the tipping hopper and has a stop surface (3) for support on a matching surface of the other of the two components, **characterised in that** the stop surface (3) of the stop plate (2) is formed from a friction material of firm consistency and that a coefficient of friction in the range of approximately 0.1 - 0.2 is set on the stop surface.

2. Arrangement as claimed in Claim 1, **characterised in that** the stop plate (2) engages around the frame element (1).

3. Arrangement as claimed in Claim 1 or 2, **characterised in that** the stop plate (2) is made from the friction material.

4. Arrangement as claimed in Claim 3, **characterised in that** the friction material is injection- moulded onto the frame element.

5. Arrangement as claimed in any one of Claims 1 to 4, **characterised in that** the friction material is moulded from a moulding composition which contains
30 - 45% binder,
35 - 55% textile, mineral or glass fibres or chips or mixtures of these components,
5 - 14% processing adjuvants and
0 - 8% friction modifying agent.

6. Arrangement as claimed in Claim 5, **characterised in that** the moulding composition contains
30 - 45% binder,
5 - 10% hardener,
30 - 40% textile chips,
5 - 15% textile threads,
0 - 8% friction modifying agent and
1 - 4% black pigments.

7. Arrangement as claimed in Claim 6, **characterised in that** the binder comprises phenol novolac and the hardener comprises hexamethylene tetramine.

8. Arrangement as claimed in any one of Claims 1 to 4, **characterised in that** the friction material contains
15 - 30% binder,
10 - 30% fibres,
10 - 25% fillers and
20 - 60% friction modifying agents.

9. Arrangement as claimed in any one of Claims 5 to 8, **characterised in that** the friction modifying agent comprises PTFE.

10. Arrangement as claimed in any one of Claims 1 to 3, **characterised in that** a sintered material which comprises iron and/or non-ferrous metals and/or carbon and/or phosphorus and/or sulphur and/or alloys thereof and/or compounds thereof in an amount of at least 50 % by volume and one or more lubricants is used as the friction material.

## Revendications

1. Dispositif d'appui d'une benne basculante sur au moins un élément de châssis (1) d'un véhicule à benne basculante, comprenant au moins une plaque de butée (2) qui est fixée à l'un de l'élément de châssis et de la benne basculante et présente une surface de butée (3) destinée à s'appuyer sur une surface opposée de l'autre de l'élément de châssis et la benne basculante,
**caractérisé par le fait**
**que** la surface de butée (3) de la plaque de butée (2) est formée d'une matière de friction de consistance solide, et que sur la surface de butée est établi un coefficient de frottement compris entre environ 0,1 et 0,2.

2. Dispositif selon la revendication 1, **caractérisé par le fait que** la plaque de butée (2) enveloppe l'élément de châssis (1).

3. Dispositif selon l'une des revendications 1 et 2, **caractérisé par le fait que** la plaque de butée (2) est constituée de la matière de friction.

4. Dispositif selon la revendication 3, **caractérisé par le fait que** la matière de friction est appliquée par projection sur l'élément de châssis (1).

5. Dispositif selon l'une des revendications 1 à 4, **caractérisé par le fait que** la matière de friction est formée d'une matière à mouler qui contient
30 à 45 % de liant,
35 à 55 % de fibres ou de rognures textiles, minérales ou de verre ou de mélanges de celles-ci,
5 à 14 % d'adjuvant de mise en oeuvre et
0 à 8 % d'agent de modification de frottement.

6. Dispositif selon la revendication 5, **caractérisé par le fait que** la matière à mouler contient
30 à 45 % de liant,
5 à 10 % de durcisseur,
30 à 40 % de rognures textiles,
5 à 15% de fils textiles,
0 à 8 % d'agent de modification de frottement et
1 à 4 % de pigments noirs.

7. Dispositif selon la revendication 6, **caractérisé par le fait que** le liant est de la novolaque et le durcisseur est de l'hexaméthylènetétramine.

8. Dispositif selon l'une des revendications 1 à 4, **caractérisé par le fait que** la matière de friction contient
15 à 30 % de liant,
10 à 30 % de fibres,
10 à 25 % de matières de charge et
20 à 60 % d'agent de modification de frottement.

9. Dispositif selon l'une des revendications 5 à 8, **caractérisé par le fait que** l'agent de modification de frottement est du PTFE.

10. Dispositif selon l'une des revendications 1 à 3, **caractérisé par le fait que** comme matière de friction est utilisé un matériau fritté constitué de fer et/ou de métaux non ferreux et/ou de carbone et/ou de phosphore et/ou de soufre et/ou d'alliages de ceux-ci et/ou de composés de ceux-ci en une quantité d'au moins 50 % en volume et d'un ou de plusieurs lubrifiants/agents antifriction.
